# EUROPEAN PATENT APPLICATION

(11) **EP 1 078 809 A1**
(43) Date of publication of application: **28.02.2001**
(21) Application number: 00202892.6
(22) Date of filing: 18.08.2000
(51) Int. Cl.: B60N 2/28

(54) **Child chair with safety belt**

(30) Priority: 20.08.1999 ES 9902253
(71) Applicant: PLAY, S.A., 08184 Palau de Plegamans (Barcelona) (ES)
(72) Inventor: Jane Stopp, Joaquim, 08184 Palau de Plegamans (ES)
(74) Representative: Ponti Sales, Adelaida

(57) **Abstract**

The seat belt is made up of a number of straps (2) linked to each other by means of a buckle (1), with one of the belts running through the seat of the child chair (3) and said strap being provided with a guide (4) and a tension adjuster (5).

The child chair provided with said seat belt is characterised in that it includes means for adjusting the position of said guide with respect to the seat, made up of a plurality of lateral recesses (7) into which are inserted the ends of a transversal rod (8), a body provided with a pair of lateral grooves (9) along which said rod (8) slides and elastic swivelling means (11) for swivelling said lateral guides (9) with respect to one of its ends.

## Description

This invention relates to a child chair provided with a seat belt, on which the position of the strap of the child seat can be adjusted.

Known in the art are child chairs provided with a seat belt, mainly for use in the interior of automobiles.

This seat belt is specially designed to comply with all safety requirements.

These seat belts are made up of various straps attached to each other through a central buckle. One of these straps is the one which crosses the seat of the chair and which passes between the legs of the child when the latter is seated upon the child seat.

This strap includes a guide for guiding the strap when it passes through an orifice made in the seat, and a tension adjuster for said belt. This tension adjuster is accessible from the front part of the seat.

On the child chairs currently known, this guide is fixed and can in some cases be uncomfortable, since the position of this guide is fixed and cannot be adjusted.

The child chair of the invention manages to solve the aforesaid disadvantages, while presenting other advantages which shall be described below.

The child chair of the invention is provided with a seat belt made up of a number of straps linked to each other by means of a buckle, with one of the straps passing through the seat of the child chair and said strap being provided with a guide and a tension adjuster, and it is characterised in that the child seat includes means for adjusting the position of said guide with respect to the seat.

Thanks to this feature, the position of the guide can be adjusted and the comfort of the child seated in the seat of the invention can be improved, in such a way that said position can be altered as the child grows and until such time as the child reaches a weight which makes a change of chair necessary.

According to a preferred embodiment of the invention, said means for adjusting the position of the aforesaid guide are made up of a number of lateral recesses into which are inserted the ends of a transversal rod provided on said guide, a body provided with a pair of lateral grooves along which said rod slides and elastic swivelling means for said body provided with said lateral grooves with respect to one of its ends.

Preferably, said elastic swivelling means are made up of a spring fitted around a rotation spindle mounted on one of the ends of the body provided with grooves.

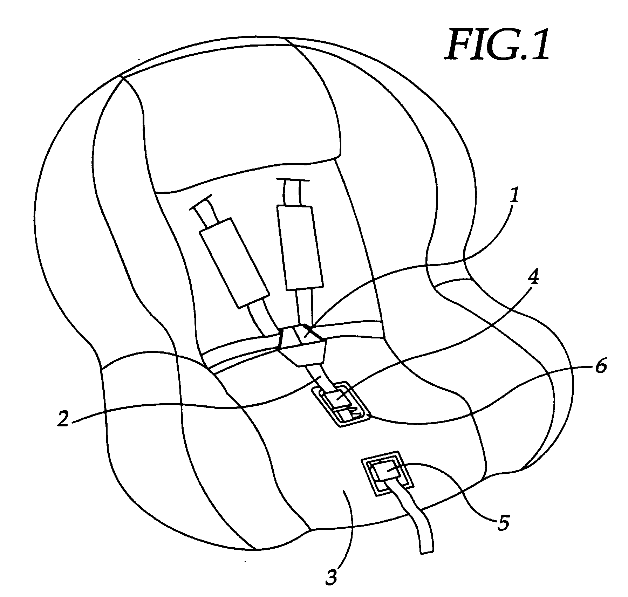

For a better understanding of all that has been set out in this specification some drawings are attached which show, solely by way of example, a practical case of embodiment of the child chair of the invention.
In said drawings, Figure 1 is a perspective view of the child chair of the invention;
Figure 2 is an elevation view in cross-section of the means for adjusting the position of the strap guide of the seat, said guide being situated inside one of the lateral recesses;
Figure 3 is an elevation view in cross-section of the means for adjusting the position of the strap guide, it being in an intermediate position for fitting into one of the lateral recesses.

As can be appreciated from Figure 1, the child seat of the invention includes a seat belt made up of a plurality of straps linked by means of a buckle 1. One of these straps 2 runs though the seat 3 of the chair 3 and includes a guide 4 and a tension adjuster for this strap.

The function of the guide 4 is to guide the strap 2 up to the tension adjuster 5 underneath the seat through the orifice 6 provided in the seat 3.

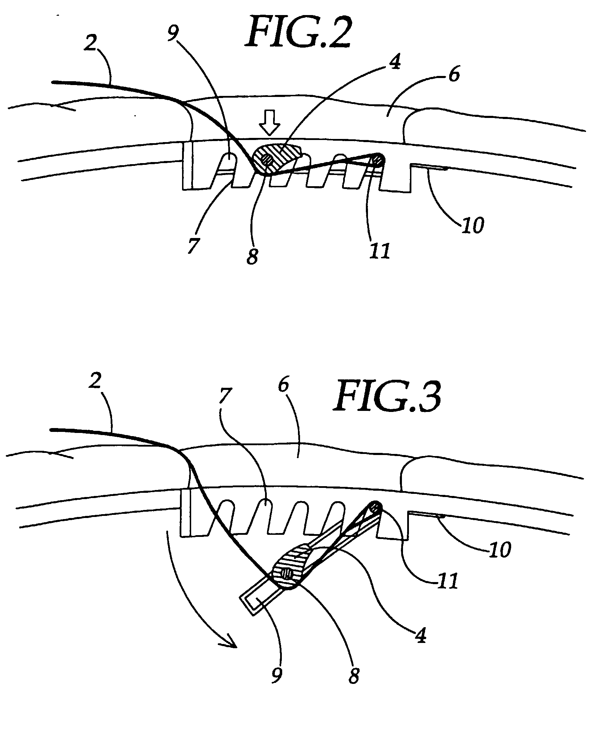

According to the invention, the position of the guide 4 can be altered, as can be appreciated in detail from Figures 2 and 3.

These means for adjusting the position of the guide 4 are made up of a plurality of lateral recesses 7 into which is inserted a transversal rod 8 which runs through said guide 4.

This transversal rod 8 slides along some lateral grooves 9 provided in a long body, which swivels elastically with respect to one of its ends. This swivelling is carried out thanks to the presence of a spring 10 mounted around a rotation spindle 11 provided on one of the ends of the body provided with the grooves.

The position of the guide 4 is adjusted in the following way.

In order to alter the position of the guide 4, pressure must be applied in the direction indicated by the arrow shown in Figure 2. This pressure will cause rotation of the body provided with the two lateral grooves 9 around the rotation spindle 11 (position shown in Figure 3).

In this position the guide 4 will simply have to be slided until it reaches the point of the recess desired for insertion of the rod 8 of the guide 4.

When this position has been reached, all that need be done is to cease to apply pressure on the guide 4, when the rod will remain in position inside the desired recess 7 so that the child in the child chair of the invention is as comfortable as possible.

Despite the fact that reference has been made to a specific embodiment of the invention, it will be obvious to a person skilled in the art that the child chair described allows of many variations and modifications and that all the details mentioned can be replaced by others that are technically equivalent, without departing from the scope of protection defined in the attached claims.

## Claims

1. Child chair provided with a seat belt, the seat belt being made up of a number of straps linked to each other by means of a buckle (1), with one of the straps (2) running through the seat (3) of the child chair and with said strap (2) being provided with a guide (4) and a tension adjuster (5), characterised in that the child chair includes means for adjusting the position of said guide (4) with respect to the seat (3).

2. Child chair as claimed in Claim 1, characterised in that said means for adjusting the position of the aforesaid guide are made up of a plurality of lateral recesses (7) into which are inserted the ends of a transversal rod (8) provided on said guide (4), a body provided with a pair of lateral grooves (9) along which said rod (8) slides and elastic swivelling means for said body provided with said lateral grooves (9) with respect to one of its ends.

3. Child chair as claimed in Claim 2, characterised in that said elastic swivelling means are made up of a spring (10) fitted around a rotation spindle (11) mounted on one of the ends of the body provided with grooves (9).
